(19) Europäisches Patentamt
European Patent Office
Office européen des brevets

(11) **EP 0 979 763 B1**

(12) **EUROPÄISCHE PATENTSCHRIFT**

(45) Veröffentlichungstag und Bekanntmachung des Hinweises auf die Patenterteilung:
**14.02.2007 Patentblatt 2007/07**

(51) Int Cl.:
***B60T 8/00*** *(2006.01)*

(21) Anmeldenummer: **99112703.6**

(22) Anmeldetag: **30.06.1999**

(54) **Verfahren zur Bestimmung des Kurvenradius einer Fahrbahn**

Method for determining the radius of curvature of a road

Méthode de détermination du rayon de courbure d'une rue

(84) Benannte Vertragsstaaten:
**DE ES FR GB IT SE**

(30) Priorität: **08.08.1998 DE 19835999**
**08.10.1998 DE 19846425**

(43) Veröffentlichungstag der Anmeldung:
**16.02.2000 Patentblatt 2000/07**

(73) Patentinhaber: **Volkswagen Aktiengesellschaft**
**38436 Wolfsburg (DE)**

(72) Erfinder: **Andreas, Peter, Dipl.-Ing.**
**38518 Gifhorn (DE)**

(74) Vertreter: **Meyer, Enno**
**Tegel & Meyer**
**Patentanwälte**
**Augsburger Strasse 24**
**82110 Germering (DE)**

(56) Entgegenhaltungen:
**EP-A- 0 529 280        EP-A- 0 712 740**
**DE-A- 4 111 614        DE-A- 4 314 827**
**US-A- 5 473 544**

EP 0 979 763 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bestimmung des Kurvenradius von Fahrbahnen, wobei die Differenz der Radgeschwindigkeit von mindestens zwei nicht angetriebenen Fahrzeugrädern gemessen und daraus die Gierrate des Fahrzeuges und somit der Kurvenradius ermittelt wird.

Beim Befahren von Kurven regelt der Führer des Kraftfahrzeuges die Fahrgeschwindigkeit unter Berücksichtigung des Kurvenradius, der Fahrbahnbeschaffenheit und der Witterungsbedingungen. In zunehmenden Maße sind moderne Kraftfahrzeuge jedoch mit Geschwindigkeitsregelsystemen und auch mit Navigationssystemen ausgestattet, so daß es wünschenswert ist, genaue Informationen über den Fahrbahnverlauf und -zustand zu erhalten. Diese Informationen können dann als weitere Parameter dem Geschwindigkeitsregelsystem oder auch dem Navigationssystem zur Verfügung gestellt werden. Beispielsweise kann dadurch ein Vergleich des Straßenverlaufes mit der gespeicherten Karte erfolgen, so daß die Genauigkeit des Navigationssystemes wesentlich verbessert wird.

Das Ziel dabei ist, den Fahrer des Kraftfahrzeuges bei dessen Bedienung so weit wie möglich zu entlasten und damit auch die Verkehrssicherheit zu erhöhen.

So ist aus der DE 197 49 306 A1 ein Verfahren zur vorausschauenden Bestimmung des Fahrkorridors eines Kraftfahrzeuges für ein automatisches Abstandswarnsystem bekannt geworden. Hierbei wird der Kurvenradius aus der Differenz der Radgeschwindigkeiten von mindestens zwei Fahrzeugrädern gemessen. Da die Radgeschwindigkeit der Fahrzeugräder jedoch nicht nur von der gefahrenen Geschwindigkeit abhängig ist, sondern auch von anderen Einflußfaktoren wie dem Radschlupf oder der Fahrbahnbeschaffenheit, liefert der nach diesem Verfahren ermittelte Kurvenradius nur einen angenäherten Wert.

Der Erfindung liegt deshalb die Aufgabe zugrunde, ein Verfahren zur Bestimmung des Kurvenradius zu schaffen, das mit einfachen und fahrzeugautarken Mitteln wesentlich genauer arbeitet und bei dem gleichzeitig unterschiedliche Einflußfaktoren berücksichtigt werden können.

Die der Erfindung zugrundeliegende Aufgabe wird bei einem Verfahren der eingangs genannten Art dadurch gelöst, daß für jedes Rad ein konstanter Radwinkel vorgegeben wird, daß an jedem Rad über den Radwinkel die Summenperiodendauer der Radimpulse über diesen Radwinkel gemessen wird, daß die Summenperiodendauer der Räder eines Radpaares einer Achse miteinander ins Verhältnis gesetzt wird und daß aus dem Verhältnis der Summenperiodendauer der Querschlupf und damit der Kurvenradius ermittelt wird.

Weitere Ausgestaltungen der Erfindung gehen aus den Unteransprüchen hervor.

Mit diesem einfach zu realisierenden Verfahren läßt sich der Kurvenradius oder die Straßenkrümmung mit sehr guter Genauigkeit ermitteln, ohne daß zusätzliche externe Hlifsmittel benötigt werden.

Der konstante Radwinkel läßt sich am einfachsten durch Vorgabe einer konstanten Anzahl von Drehzahlimpulsen bestimmen, da Fahrzeuge mit ABS oder ASR ohnehin über Impulsgeber an allen Rädern verfügen.

Zur Erhöhung der Genauigkeit der Messung ist es von Vorteil, wenn beispielsweise vor jeder Messung oder in vorgegebenen Zeitabständen ein Offsetabgleich der an allen Rädern gemessenen Zeiten vorgenommen wird, indem über das Verhältnis der gemessenen Zeiten ein Mittelwert gebildet wird. Dieser Offsetabgleich ist zweckmäßig, um durch Fahrbahnunterschiede, unterschiedliche Straßenverhältnisse oder auch durch Reifenunterschiede bedingte Toleranzen auszugleichen. Der Mittelwert ist ein Maß für den Fehler und kann dann bei der Berechnung des Kurvenradius berücksichtigt werden.

Um den Einfluß von Beschleunigungsvorgängen des Kraftfahrzeuges als Fehlerquelle auszuschließen, ist es weiterhin zweckmäßig, wenn der Beginn der Zeitmessung an den Rädern eines Radpaares synchronisiert wird.

Die Erfindung wird nachfolgend an einem Ausführungsbeispiel anhand von Zeichnungen näher erläutert.

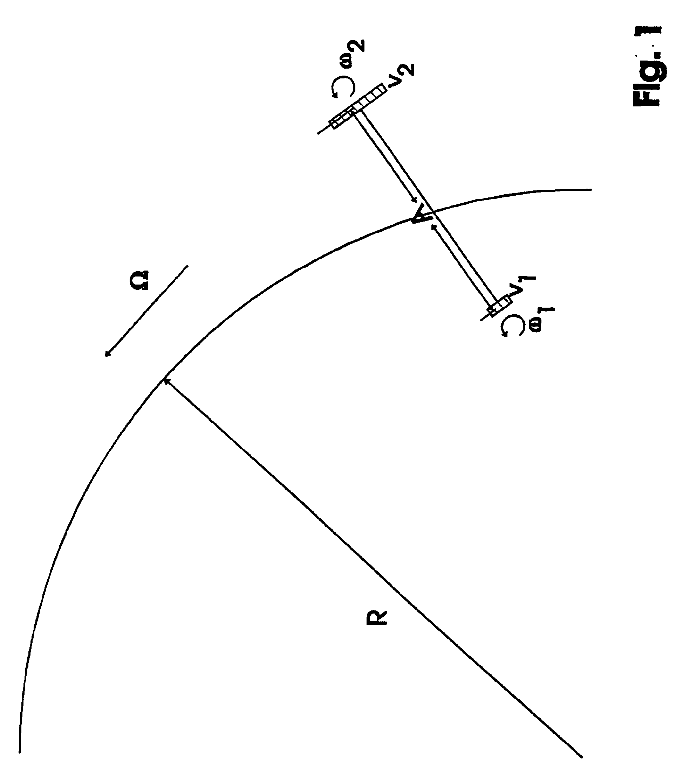

Die Fig. 1 zeigt hierzu schematisch ein Radpaar eines Kraftfahrzeuges beim Befahren einer Kurve mit einem Radius R entlang einer Wegstrecke ?. Das Radpaar weist einen konstanten Abstand A zueinander auf.

Zur Ermittlung des Kurvenradius R ist zunächst davon auszugehen, daß jedes Rad über einen nicht dargestellten Impulsgeber verfügt, so daß ein konstanter Radwinkel $\varphi$ vorgegeben werden kann, der für jedes Rad gleich groß ist. Das kann einfach dadurch erfolgen, daß eine konstante Anzahl von Drehzahlimpulsen und damit der Radwinkel $\varphi$ vorgegeben wird.

Für freidrehende nicht angetriebene Räder gilt die translatorische Geschwindigkeit $v_1$, $v_2$ der Räder folgende Beziehung

1)

$$v_1 = (R - \frac{A}{2}) * \Omega = r_1 * \omega_1$$

2)

$$v_2 = (R + \frac{A}{2}) * \Omega = r_2 * \omega_2$$

Der Kurvenradius R läßt sich nach der folgenden Formel berechnen:

3)

$$R = \frac{A}{2} * \frac{1 + \dfrac{r_1 * \omega_1}{r_2 * \omega_2}}{1 - \dfrac{r_1 * \omega_1}{r_2 * \omega_2}} \approx \frac{A}{1 - \dfrac{r_1 * \omega_1}{r_2 * \omega_2}}$$

Die Vereinfachung für den Kurvenradius R gilt wegen der folgenden Beziehungen:

4)

$$\frac{r_1 * \omega_1}{r_2 * \omega_2} = \frac{R - \dfrac{A}{2}}{R + \dfrac{A}{2}} \approx 1$$

Dabei wird angenommen, daß

$$R > 250m$$

und

$$A \leq 2m$$

Für die Winkelgeschwindigkeit jedes Rades gilt:

5)

$$\omega_i = \frac{\Delta \varphi_0}{\Delta t_i}$$

wobei $\triangle\varphi_0$ ein fester Winkel ist und $\Delta t_1$ die Zeit für die Raddrehung um den Winkel $\Delta\varphi_0$ angibt.

6)

$$\frac{1}{R} = \frac{1}{A}\left(1 - \frac{r_1}{r_2} * \frac{\Delta t_2}{\Delta t_1}\right)$$

Wird dabei für das Verhältnis der aktuellen Meßradien

$$\frac{r_1}{r_2} = \xi$$

und für das Verhältnis der aktuellen Meßzeiten

$$\frac{\Delta t_2}{\Delta t_1} = \tau$$

gesetzt, so ergibt sich für den reziproken Kurvenradius:

7)

$$\frac{1}{R} = (1 - \xi * \tau) \cdot \frac{1}{A}$$

Bei Geradeausfahrt gilt dabei:

$$\frac{1}{R} \Rightarrow 0 \; und \; \xi * \tau_0 \Rightarrow 1$$

$$\tau_0 = \frac{1}{\xi}$$

Damit ist:

8)

$$\frac{1}{R} \approx \frac{1}{A}\left(1 - \frac{\tau}{\tau_0}\right)$$

Die Bestimmung von $\tau_0$ erfolgt einfach durch Mittelwertbildung:

$$\tau_0 = mw10'(\tau)$$

Meßprinzip

Es erfolgt eine sychronisierte Messung der Zeit $\Delta t_1$, $\Delta t_2$ für einen vorgegebenen Radwinkel bzw. eine vorgegebene Anzahl von Drehzahlimpulsen für beide Räder auf einer Achse, so daß das Zeitverhältnis

$$\tau = \frac{\Delta t_2}{\Delta t_1}$$

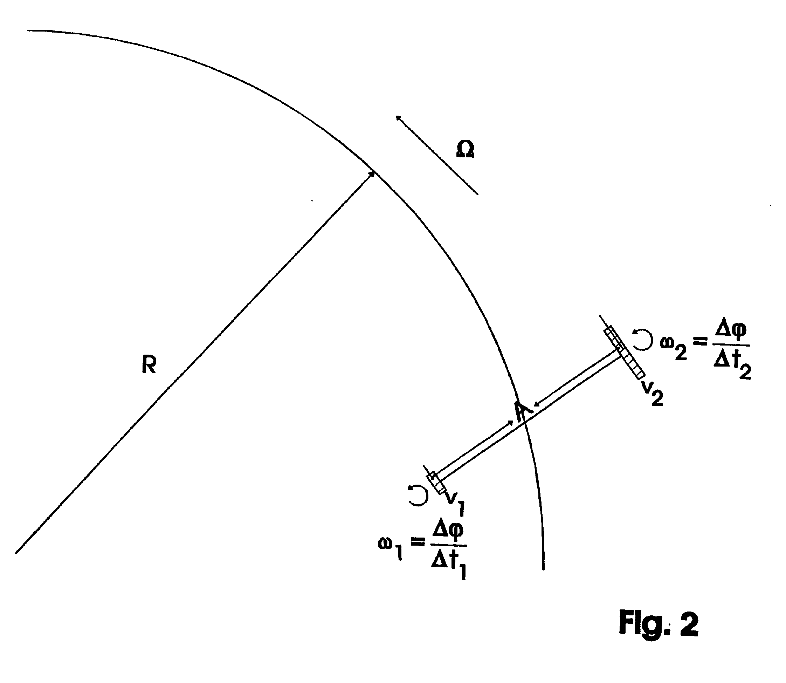

ermittelt werden kann (Fig. 2).

Der aktuelle Kurvenradius beträgt damit entsprechend Formel 8:

9)

$$R = \frac{A}{1 - \frac{\tau}{\tau_0}}$$

Für $\tau_0$ gilt hierbei:

$$\tau_0 = \tau(R \rightarrow \infty) \approx mw(\tau)$$

Der auf die vorstehend beschriebene Weise ermittelte Kurvenradius A kann nun dem bordeigenen Rechner zur Verfügung gestellt werden.

**BEZUGSZEICHENLISTE**

| | |
|---|---|
| A | Radabstand einer Radachse |
| R | Kurvenradius |
| $v_1$ | Geschwindigkeit Rad 1 |
| $v_2$ | Geschwindigkeit Rad 2 |
| $\Omega$ | zurückgelegte Wegstrecke des Fahrzeuges |
| $r_1$ | Radius Rad 1 |
| $r_2$ | Radius Rad 2 |
| $\Omega$ | Winkelgeschwindigkeit des Fahrzeuges |
| $\omega_1$ | Winkelgeschwindigkeit Rad 1 |
| $\omega_2$ | Winkelgeschwindigkeit Rad 2 |
| $\ell_0$ | Radwinkel |
| $\triangle\ell_0$ | fester Radwinkel |
| $\triangle t_1$ | Zeit für die Raddrehung um $\triangle\ell_0$ |
| $t_{1,2}$ | Zeit für die Raddrehung |
| $\xi$ | Verhältnis der aktuellen Radradien |
| $\tau$ | Verhältnis der aktuellen Meßzeiten |

**Patentansprüche**

1. Verfahren zur Bestimmung des Kurvenradius von Fahrbahnen, wobei die Differenz der Radgeschwindigkeit von mindestens zwei Fahrzeugrädern gemessen und daraus die Gierrate des Fahrzeuges und somit der Kurvenradius ermittelt wird, **dadurch gekennzeichnet, daß** für jedes Rad ein konstanter Radwinkel vorgegeben wird, daß an jedem Rad über den Radwinkel die Summenperiodendauer über diesen Radwinkel gemessen wird, daß die Summenperiodendauer der Räder eines Radpaares einer Achse miteinander ins Verhältnis gesetzt wird und daß aus dem Verhältnis der Summenperiodendauer der Querschlupf und damit der Kurvenradius ermittelt wird.

2. Verfahren nach Anspruch 1, **dadurch gekennzeichnet, daß** der konstante Radwinkel durch Vorgabe einer konstanten Anzahl von Drehzahlimpulsen bestimmt wird.

3. Verfahren nach Anspruch 1 und 2, **dadurch gekennzeichnet, daß** ein Offsetabgleich der an allen Rädern gemessenen Zeiten vorgenommen wird, indem über das Verhältnis der gemessenen Zeiten ein Mittelwert gebildet wird.

4. Verfahren nach Anspruch 3, **dadurch gekennzeichnet, daß** der Offsetabgleich in vorgegebenen Zeitabständen vorgenommen wird.

5. Verfahren nach einem der Ansprüche 1 bis 4, **dadurch gekennzeichnet, daß** der Beginn der Zeitmessung an den Rädern eines Radpaares synchronisiert wird.

**Claims**

1. Method for determining the radius of curvature of roads, the difference between the wheel speeds of at least two vehicle wheels being measured, and the yaw rate of the vehicle, and thus the radius of curvature, being determined therefrom, **characterized in that** a constant wheel angle is prescribed for each wheel, **in that** at each wheel the total period duration over the wheel angle is measured via this wheel angle, **in that** the ratio of the total period durations of the wheels of a pair of wheels of an axle to one another is formed, and **in that** the transverse slip, and thus the radius of curvature, is determined from the ratio of the total period durations.

2. Method according to Claim 1, **characterized in that** the constant wheel angle is determined by prescribing a constant number of rotational speed pulses.

3. Method according to Claims 1 and 2, **characterized in that** an offset compensation of the times measured at all the wheels is undertaken by forming a mean value of the ratio of the measured times.

**4.** Method according to Claim 3, **characterized in that** the offset compensation is undertaken at prescribed time intervals.

**5.** Method according to one of Claims 1 to 4, **characterized in that** the beginning of the time measurement is synchronized at the wheels of a pair of wheels.


**Revendications**

**1.** Procédé pour déterminer le rayon de courbure de chaussées, la différence entre les vitesses d'au moins deux roues de véhicule étant mesurée et le taux de lacet du véhicule et ainsi le rayon de courbure étant déterminé à partir de celle-ci, **caractérisé en ce qu'**un angle de roue constant est prédéfini pour chaque roue, que la durée de la période totale sur cet angle de roue est mesurée sur chaque roue par le biais de l'angle de roue, que les durées de période totale des roues d'une paire de roues d'un essieu sont mises en rapport entre elles et que le glissement transversal et ainsi le rayon de courbure est déterminé à partir du rapport entre les durées de période totale.

**2.** Procédé selon la revendication 1, **caractérisé en ce que** l'angle de roue constant est déterminé en prédéfinissant un nombre constant d'impulsions de vitesse de rotation.

**3.** Procédé selon la revendication 1 et 2, **caractérisé en ce qu'**il est réalisé une compensation de l'offset des durées mesurées à toutes les roues en calculant une valeur moyenne du rapport des temps mesurés.

**4.** Procédé selon la revendication 3, **caractérisé en ce que** la compensation de l'offset est réalisée à des intervalles donnés.

**5.** Procédé selon l'une des revendications 1 à 4, **caractérisé en ce que** le début de la mesure de la durée sur les roues d'une paire de roues est synchronisé.

Fig. 1

$$\omega_2 = \frac{\Delta \varphi}{\Delta t_2}$$

$v_2$

$v_1$

$$\omega_1 = \frac{\Delta \varphi}{\Delta t_1}$$

$\Omega$

$R$

Fig. 2